# EUROPEAN PATENT APPLICATION

(11) **EP 2 065 814 A1**
(43) Date of publication of application: **03.06.2009**
(21) Application number: 07022528.9
(22) Date of filing: 21.11.2007
(51) Int. Cl.: G06F 17/30

(54) **Module for managing data objects of a database**

(71) Applicant: SIEMENS AKTIENGESELLSCHAFT, 80333 München (DE)
(72) Inventor: Costanzo, Luca, 16127 Genova (IT); Ferralasco, Daniela, 16136 Genova (IT)
(74) Representative: Fischer, Michael

(57) **Abstract**

Module for managing data objects of a database, comprising means for creating a main table containing at least one common field associated with the data objects, the at least one common field being an element of each data object, creating a first system table containing at least one definition of at least one custom field associated with a data object, the at least one custom field being a particular element of the data object, creating a second system table containing at least one value associated with the at least one custom field. The present invention has the major advantage that it allows an easy manipulation of database objects of different structures without having to change the structure of the entire database itself.

## Description

The invention relates to a module for managing data objects of a database according to claim 1, especially in case a structure of the data objects has to be modified.
The module for managing the data objects in the database will be further referred to as module.

The maintenance and updating of databases often require changes related to modification of database components, further referred to as data objects. The update is especially complex in case the data object, containing another structure than the totality of all data objects already comprised in the database, is to be appended to the database. This equally applies to the case the data object is already a part of the database and its structure has to be changed. The structure of the data object is to be understood as the number and types of data fields associated with the data object.
Present solutions use an approach consisting in changing the entire database according to the structure of the data object to be inserted or changed. Thus, this solution requires changing all the data objects contained in the database by adding "dummy" data fields to all data objects in order to make the database structure consistent in terms of number and types of fields. Furthermore, all "dummy" data fields have to be initialized with a value, although there is no use for it. This has the drawback that the memory consumption increases, especially for very large databases the amount of additional memory needed for "dummy" data fields can be tremendous. Another disadvantage is that the maintenance work associated with such an update of the database is time consuming and error prone. Furthermore, during the update time, the database is not available for users, this fact causing delays in the work of database processing personnel.
Another approach used by present solutions is to create new database tables for each differing set of data objects. This method has the drawback that the managing of such a database gets very complex and the structure unclear.
Both methods presented above have furthermore the disadvantage that updates of databases have to be performed by skilled personnel with database knowledge.

The module described in this invention is further explained by the following example and drawing, whereby:
Figure: Example of an implementation of a module for managing data objects of a database

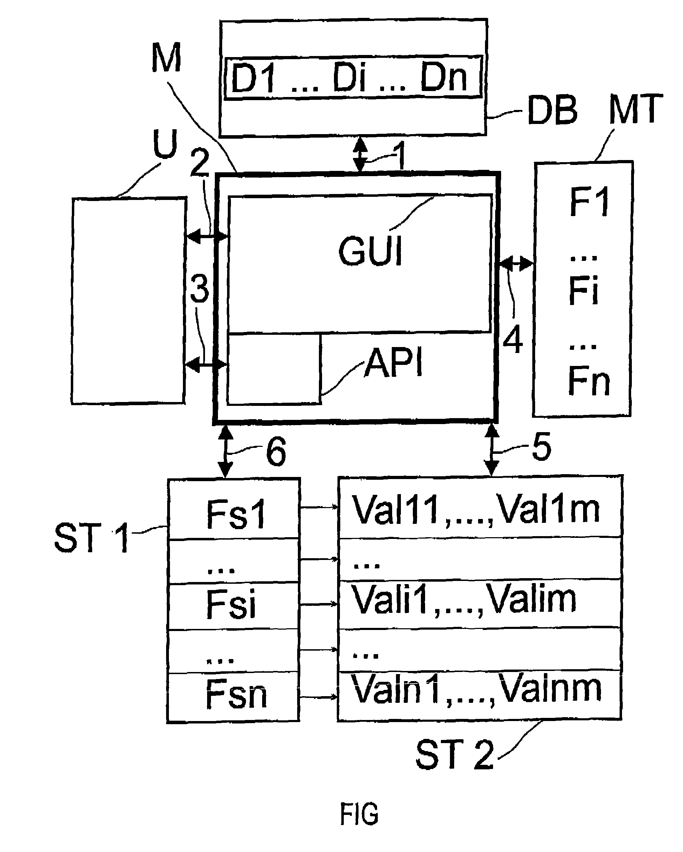

Figure shows elements of a typical system comprising a module M for managing data objects D of a database DB and their interconnections. This example illustrates a case where a data object D belonging to the database DB is to be changed by a user U.
The database DB is connected by a bidirectional communication path 1 to the module M. This connection is used by the module M to retrieve and/or store the data object D. The module M is further connected by a bidirectional communication path 4 to a main table M. Fields of the data object D retrieved from the database DB are sorted by the module depending on the database structure. Common fields F1,...,Fn, thus fields matching an original structure of the data objects, are stored in the main table M using the communication path 4. Custom fields Fs1,...,Fsn, thus fields which do not match the original structure of the data objects, are stored in a first system table ST 1 by using a bidirectional communication path 6. Values Val11,...,Val1m, Vali1,...,Valim, Valn1,...,Valnm contained in the custom fields Fsl,...,Fsi,...,Fsn respectively are stored in a second system table ST 2 by using a bidirectional communication path 5. The double arrows in the figure represent an association of a custom field with one or more values, i.e. the custom field Fs1 contains at least one of the values Val11 to Vallm. For clarity reasons an index m has been used for all values of custom fields although each custom field may contain a different number of values.
A totality of custom and common fields constitutes the entirety of fields associated with the data object D. The user U is connected to a graphical user interface GUI using a bidirectional path 2. The graphical user interface lists the totality of custom and common fields and allows the user U to change and/or delete the data object D. Furthermore the graphical user interface GUI makes it possible for the user to save back a changed data object D. Another possibility for the user U is to retrieve an application programming interface API from the module M in order to embed the functionality of the module described herein into an own software program. For clarity reasons the retrieval of the API is shown by an interaction arrow 3.

One goal to be achieved is to be seen in providing a module M for managing data objects of a database, whereby a solution for eliminating the need of update for all the data objects D1,...,Di,...,Dn, making it possible to only change and/or add the required data fields is presented.
One way the goal is achieved is by providing a module M for managing data objects D1, ..., Di, ..., Dn of a database DB, comprising means for creating a main table MT containing at least one common field F1,..., Fn associated with the data objects D1, ..., Di, ..., Dn, the at least one common field F1, ..., Fi, ..., Fn being an element of each data object Di, creating a first system table ST 1 containing at least one definition of at least one custom field Fs1,...,Fsi,...,Fsn associated with a data object Di, the at least one custom field Fsl,...,Fsi,...,Fsn being a particular element of the data object Di, creating a second system table ST 2 containing at least one value Val11,...,Val1m, Vali1,...,Valim, Valn1,...,Valnm associated with the at least one custom field Fsl,...,Fsi,...,Fsn.

Another goal to be achieved is to be seen in providing an application programming interface API for users of the module M who employ an own customized graphical user interface. The application programming interface API provides a possibility to access managing functions like delete a custom field, add a custom field, read a common field, etc. of the module without having to use a graphical user interface GUI associated with the module M itself. For example, the managing functions are located in a dynamic link library and can be invoked by a user program by loading the dynamic link library and using the application programming interface APT to access the said managing functions.

The most important advantage of the proposed module M lies in the ability to separate data fields of a standard type, further referred to as common fields F1,...,Fi,...,Fn, from data fields which have a custom structure, further referred to as custom fields Fsl,...,Fsi,...,Fsn. Hence, the need for update of all database objects D1,...,Di,...,Dn is avoided because the common fields F1,...,Fi,...,Fn which are contained in the main table MT are processed in a usual way while the custom fields Fs1,...,Fsi,...,Fsn are processed separately.

According to a preferred embodiment, the module M comprises a graphical user interface GUI with means for listing a totality of fields and their corresponding values, the fields being associated with a user-selected data object Di.

According to a preferred embodiment, the graphical user interface GUI comprises means for creating new fields associated with the user-selected data object Di.

According to a preferred embodiment, the graphical user interface GUI comprises means for modifying a field and its corresponding values, the field being associated with the user-selected data object Di.

According to a preferred embodiment, the graphical user interface GUI comprises means for deleting a field and its corresponding values, the field being associated with the user-selected data object Di.
The possibilities of creating and/or modifying and/or deleting and/or listing data objects and associated fields advantageously facilitate manipulation of database objects by personnel without database knowledge.

According to a preferred embodiment, the graphical user interface GUI comprises means for updating at least one of the tables: main table MT, first system table ST 1, second system table ST 2. This advantageously allows a user to keep the fields of any data object Di up to date.

According to a preferred embodiment, the graphical user interface GUI comprises means for updating the database DB. This advantageously makes it easy to keep a database DB up to date, especially from the point of view that any changes made to the data object structure are incorporated into the database DB by means of the main MT, first ST 1 and second table ST 2 without user interaction.

Implementing the module in an application programming interface API in order to programmatically access managing functions for data objects D1,...,Di,...,Dn advantageously extends the functionality of the described module M by allowing the underlying functionality to be used in other environments than the module M itself. The application programming interface API is a gateway to accessing multiple functions used for database DB manipulation.

Implementing the module M in a computer executable program allows an easy deployment of the module M to clients and ensures a high degree of usability as a computer is the only infrastructure needed for using the module M.

### List of Abbreviations

- U: = User
- GUI: = Graphical User Interface
- DB: = Database
- D1,...,Di,...,Dn: = Data Objects
- ST 1: = First System Table
- ST 2: = Second System Table
- MT: = Main Table
- F1,...,Fi,...,Fn =: Common fields of the data object D
- Fs1,...,Fsi,...,Fsn=: Custom fields of the data object D
- Val11,...,Val1m: = Values of the custom field Fs1
- Vali1,...,Valim: = Values of the custom field Fsi
- Valn1,...,Valnm =: Values of the custom field Fsn

- API: = Application Programming Interface
- M: = Module for managing data objects of a database
- 1: = Bidirectional Communication Path between M and DB
- 2: = Bidirectional Communication Path between GUI and U
- 3: = Interaction Arrow
- 4: = Bidirectional Communication Path between M and MT
- 5: = Bidirectional Communication Path between M and ST 2
- 6: = Bidirectional Communication Path between M and ST 1

## Claims

1. Module (M) for managing data objects (D1,...,Di,...,Dn) of a database (DB), comprising means for
a) creating a main table (MT) containing at least one common field (F1,...,Fi,...,Fn) associated with the data objects (D1,...,Di,...,Dn), the at least one common field (F1,...,Fi,...,Fn) being an element of each data object (Di),
b) creating a first system table (ST 1) containing at least one definition of at least one custom field (Fs1,...,Fsi,...,Fsn) associated with a data object (Di), the at least one custom field being a particular element of the data object (Di),
c) creating a second system table (ST 2) containing at least one value (Val11,...,Val1m, Vali1,...,Valim, Valn1,...,Valnm) associated with the at least one custom field (Fs1,...,Fsi,...,Fsn).

2. Module (M) according to one of the preceding claims, comprising a graphical user interface (GUI) with means for listing a totality of fields and their corresponding values, the fields being associated with a user-selected data object (Di).

3. Module (M) according to claim 2, whereby the graphical user interface (GUI) comprises means for creating new fields associated with the user-selected data object (Di).

4. Module (M) according to one of the preceding claims 2 to 3, whereby the graphical user interface (GUI) comprises means for modifying a field and its corresponding values, the fields being associated with the user-selected data object (Di).

5. Module (M) according to one of the preceding claims 2 to 4, whereby the graphical user interface (GUI) comprises means for deleting a field and its corresponding values, the fields being associated with the user-selected data object (Di).

6. Module (M) according to one of the preceding claims 2 to 5, whereby the graphical user interface (GUI) comprises means for updating at least one of the tables: main table (MT), first system table (ST 1), second system table (ST 2).

7. Module (M) according to one of the preceding claims 2 to 7, whereby the graphical user interface (GUI) comprises means for updating the database (DB).

8. Use of module (M) according to claims 1 to 7, as an application programming interface API), suitable for integration into a specific user-developed software program.

9. Use of module (M) according to claims 1 to 7 in a computer executable program.
